# EUROPEAN PATENT APPLICATION

(11) **EP 4 300 644 A1**
(43) Date of publication of application: **03.01.2024**
(21) Application number: 22759377.9
(22) Date of filing: 09.02.2022
(51) Int. Cl.: H01M 10/04, H01M 50/107, H01M 50/152, H01M 50/342, H01M 50/578

(54) **CYLINDRICAL BATTERY**

(30) Priority: 26.02.2021 JP 2021029949
(71) Applicant: Panasonic Energy Co., Ltd., Moriguchi-shi, Osaka, 570-8511 (JP)
(72) Inventor: DAIRA Shuhei, Kadoma-shi, Osaka 571-0057 (JP); OKUTANI Oose, Kadoma-shi, Osaka 571-0057 (JP)
(74) Representative: Novagraaf International SA
(86) International application number: PCT/JP2022/005107
(87) International publication number: WO 2022/181338

(57) **Abstract**

A cylindrical battery (10) comprises an electrode body (14) in which a positive electrode (11) and a negative electrode (12) are wound with a separator (13) therebetween, a bottomed cylindrical external can (16) which accommodates the electrode body (14), and a sealing body (17) which seals an opening of the external can (16). A bottom part (40) of the external can (16) has a reverse part (43) which has a raised shape such that the reverse part (43) protrudes toward the electrode body (14) in the axial direction and which reverses when the pressure inside the battery reaches a first pressure. The sealing body (17) has a sealing plate (27) which releases gas that is inside the battery by breaking when the pressure inside the battery reaches a second pressure that is higher than the first pressure. The sealing plate (27) functions as a safety valve.

## Description

### TECHNICAL FIELD

The present disclosure relates to a cylindrical battery.

### BACKGROUND ART

PATENT LITERATURE 1 discloses a conventional cylindrical battery. This cylindrical battery comprises a sealing assembly having a sealing plate, a metal plate as an internal terminal plate, and an insulating member interposed between the sealing plate and the metal plate. In this cylindrical battery, the inside is hermetically sealed by the sealing assembly being crimped and fixed to the opening of a bottomed cylindrical metal-made exterior can via a resin-made gasket. On the sealing plate of the cylindrical battery, there is provided an inclined portion that is displaced outward in the axial direction and the thickness of which is continuously decreasing as going from the inner periphery to the outer periphery in the radial direction. This cylindrical battery operates a safety mechanism when its internal pressure rises due to abnormal heat generation. In detail, when the internal pressure of the cylindrical battery rises due to abnormal heat generation thereof, the inclined portion of the sealing plate is inverted to disconnect the current path inside the battery. Moreover, when the internal pressure further rises, the inclined portion ruptures to allow gas inside the battery to be discharged to the outside. The sealing plate functions as a safety valve.

### CITATION LIST

### PATENT LITERATURE

PATENT LITERATURE 1: International Publication No. WO 2016/157749

### SUMMARY

### TECHNICAL PROBLEM

In a wound electrode assembly, gas generated on electrode plates flows out from both end faces of the electrode assembly in the axial direction. When the safety valve is provided in the sealing assembly sealing the opening of the exterior can, gas flowing out from the end face, of the electrode assembly, that is on the bottom side thereof diffuses to the hollow portion of the electrode assembly and the inner side of the lateral surface. Although the gas that has diffused to the hollow portion of the electrode assembly may reach the safety valve without damaging the exterior can, the gas that has diffused to the outer side of the electrode assembly may cause a concern that the lateral surface of the exterior can is damaged, for example, an open hole to be generated on the relevant lateral surface.

In such a background, when in the case where abnormal heat generation of the cylindrical battery occurs, high temperature gas blows out from the lateral surface of the exterior can other than the safety valve, there arises a case, for example, for a group battery comprising a plurality of cylindrical batteries, where the high temperature gas causes a cylindrical battery and/or a device therearound to be damaged.

It is therefore an advantage of the present disclosure to provide a cylindrical battery that, in the case of abnormal heat generation, scarcely causes the lateral surface to be damaged and readily allows high temperature gas to be smoothly discharged to the outside via the safety valve.

### SOLUTION TO PROBLEM

In order to solve the aforementioned problem, there is provided a cylindrical battery of the present disclosure, comprising: an electrode assembly having a positive electrode and a negative electrode wound via a separator; a bottomed tubular exterior can housing the electrode assembly; and a sealing assembly sealing an opening of the exterior can, wherein a bottom of the exterior can has an inversion portion that has a projecting shape protruding to the electrode assembly side in an axial direction and that is inverted when a battery internal pressure reaches a first pressure, and the sealing assembly has a safety valve that discharges gas inside the battery by rupturing when the battery internal pressure reaches a second pressure larger than the first pressure.

### ADVANTAGEOUS EFFECTS OF INVENTION

According to the cylindrical battery according to the present disclosure, in the case of abnormal heat generation, the lateral surface is scarcely caused to be damaged, and high temperature gas is readily allowed to be smoothly discharged to the outside via the safety valve.

### BRIEF DESCRIPTION OF DRAWINGS

FIG. 1 is an axial directional sectional view of a cylindrical battery according to an embodiment of the present disclosure.
FIG. 2 is a perspective view of an electrode assembly of the aforementioned cylindrical battery.
FIG. 3 is an expanded sectional view about the periphery of the sealing assembly of the aforementioned cylindrical battery.
FIG. 4 is a view for describing an inversion operation of a sealing plate of the aforementioned cylindrical battery.
FIG. 5 is a view for describing an inversion operation of an inversion portion of the aforementioned cylindrical battery.
FIG. 6 is a sectional view of a cylindrical battery of a modification corresponding to FIG. 1.

### DESCRIPTION OF EMBODIMENTS

Hereafter, embodiments of a cylindrical battery according to the present disclosure will be described in detail with reference to the drawings. Notably, the cylindrical battery of the present disclosure may be a primary battery or may be a secondary battery. Otherwise, it may be a battery using an aqueous electrolyte or may be a battery using a non-aqueous electrolyte. While there is hereafter exemplarily illustrated, as a cylindrical battery 10 which is one of the embodiments, a non-aqueous electrolyte secondary battery (lithium ion battery) using a non-aqueous electrolyte, the cylindrical battery of the present disclosure is not limited to this.

It is originally supposed from the first that, when a plurality of embodiments, modifications, and the like are included below, characteristic portions of these be properly combined to configure a new embodiment. For embodiments below, the same configurations are given the same signs in the drawings and their duplicate description is omitted. Moreover, the plurality of drawings include schematic diagrams, and dimension ratios between lengths, depths, heights, and the like of components do not necessarily coincide between different diagrams. The axial direction of the cylindrical battery 10 coinciding with the height direction of the cylindrical battery 10, for convenience of description, a sealing assembly 17 side in the axial direction is regarded as being on the "upside", and a bottom side of an exterior can 16 in the axial direction is regarded as being on the "downside". Out of the constituents described below, constituents that are not disclosed in the independent claim(s), showing the most generic concept, are optional constituents, not the essential constituents.

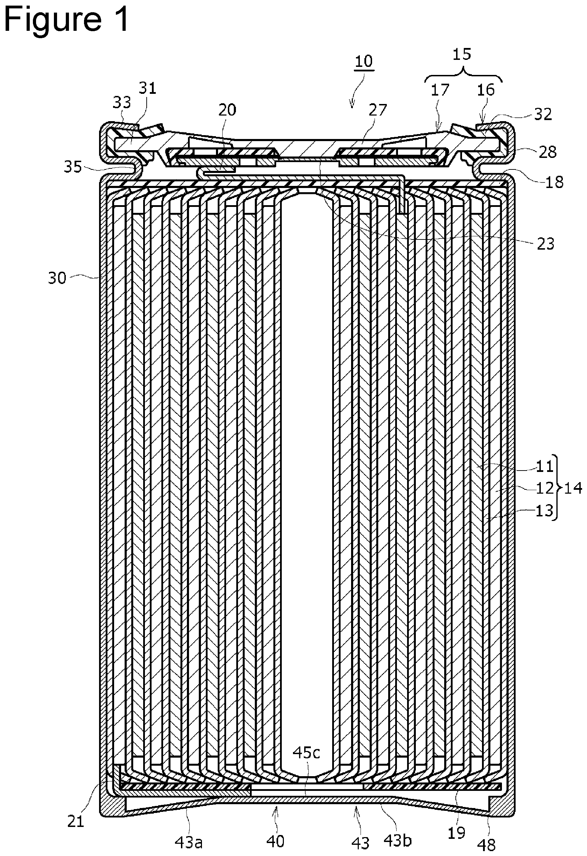

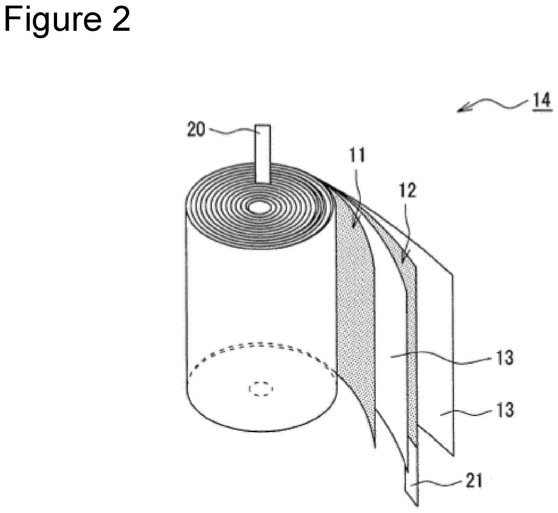

FIG. 1 is an axial directional sectional view of the cylindrical battery 10 according to an embodiment of the present disclosure, and FIG. 2 is a perspective view of an electrode assembly 14 of the cylindrical battery 10. As shown in FIG. 1, the cylindrical battery 10 comprises a winding-type electrode assembly 14, a non-aqueous electrolyte (not shown), and a battery case 15 housing the electrode assembly 14 and the non-aqueous electrolyte. As shown in FIG. 2, the electrode assembly 14 includes a positive electrode 11, a negative electrode 12, and separators 13 interposed between the positive electrode 11 and the negative electrode 12, and has a winding structure having the positive electrode 11 and the negative electrode 12 wound via the separators 13. As shown in FIG. 1, the battery case 15 is constituted of a bottomed tubular exterior can 16 and a sealing assembly 17 closing an opening of the exterior can 16. Moreover, the cylindrical battery 10 comprises a resin-made gasket 28 arranged between the exterior can 16 and the sealing assembly 17.

The non-aqueous electrolyte includes a non-aqueous solvent and an electrolyte salt dissolved in the non-aqueous solvent. For the non-aqueous solvent, there may be used, for example, esters, ethers, nitriles, amides, a mixed solvent of two or more of these, and the like. The non-aqueous solvent may contain a halogen-substituted substance having halogen atom(s) such as fluorine substituted for at least one or some of hydrogen atoms of these solvents. Notably, the non-aqueous electrolyte is not limited to a liquid electrolyte but may be a solid electrolyte using a gelatinous polymer or the like. For the electrolyte salt, a lithium salt such as LiPF6 is used.

As shown in FIG. 2, the electrode assembly 14 has the long strip-shaped positive electrode 11, the long strip-shaped negative electrode 12, and the two long strip-shaped separators 13. Moreover, the electrode assembly 14 has a positive electrode lead 20 joined to the positive electrode 11 and a negative electrode lead 21 joined to the negative electrode 12. The negative electrode 12 is formed to have a certain size larger than the positive electrode 11 in order to restrain lithium from precipitating, and is formed to be longer than the positive electrode 11 in the longitudinal direction and the width direction (transverse direction). Moreover, the two separators 13 are formed to have a certain size larger at least than the positive electrode 11 and, for example, are arranged so as to interpose the positive electrode 11.

The positive electrode 11 has a positive electrode current collector and positive electrode mixture layers formed on both surfaces of the current collector. For the positive electrode current collector, there can be used foil of a metal, such as aluminum or aluminum alloy, that is stable in the potential range of the positive electrode 11, a film having the metal disposed on its surface layers, and the like. The positive electrode mixture layers include a positive electrode active material, a conductive agent, and a binder agent. The positive electrode 11 can be produced, for example, by applying, on the positive electrode current collector, positive electrode mixture slurry including the positive electrode active material, the conductive agent, the binder agent, and the like, drying and afterward compressing the coating film to form the positive electrode mixture layers on both surfaces of the current collector.

The positive electrode active material is composed of a lithium-containing metal composite oxide as a main component. Examples of metal element(s) contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers can include carbon materials such as carbon black, acetylene black, Ketjen black, and graphite. Examples of the binder agent included in the positive electrode mixture layers can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, a cellulose derivative such as carboxymethylcellulose (CMC) or its salt, polyethylene oxide (PEO), or the like.

The negative electrode 12 has a negative electrode current collector and negative electrode mixture layers formed on both surfaces of the current collector. For the negative electrode current collector, there can be used foil of a metal, such as copper or copper alloy, that is stable in the potential range of the negative electrode 12, a film having the metal disposed on its surface layers, and the like. The negative electrode mixture layers include a negative electrode active material and a binder agent. The negative electrode 12 can be produced, for example, by applying, on the negative electrode current collector, negative electrode mixture slurry including the negative electrode active material, the binder agent, and the like, drying and afterward compressing the coating film to form the negative electrode mixture layers on both surfaces of the current collector.

For the negative electrode active material, there is generally used a carbon material that reversibly stores and releases lithium ions. Preferably examples of the carbon material include graphite such as natural graphite such as flaky graphite, massive graphite, and earthy graphite and artificial graphite such as massive artificial graphite and graphitized mesophase carbon microbeads. In the negative electrode mixture layers, there may be included, as the negative electrode active material, a Si material containing silicon (Si). Moreover, for the negative electrode active material, there may be used a metal, other than Si, that is alloyed with lithium, an alloy containing the metal, a compound containing the metal, and the like.

While for the binder agent included in the negative electrode mixture layers, there may be used fluorine resins, PAN, polyimide resins, acrylic resins, polyolefin resins, and the like as in the case of the positive electrode 11, there is preferably used styrenebutadiene rubber (SBR) or its modified substance. In the negative electrode mixture layers, for example, in addition to SBR or the like, there may be included CMC or its salt, polyacrylic acid (PAA) or its salt, polyvinyl alcohol, and/or the like.

For the separators 13, there are used porous sheets having ion permeability and insulation ability. Specific examples of the porous sheet include a microporous thin film, woven fabric, nonwoven fabric, and the like. Preferable materials for the separators 13 are polyolefin resins such as polyethylene and polypropylene, cellulose, and the like. Each separator 13 may have any of a single layer structure and a laminate structure. A heat resistant layer and/or the like may be formed on a surface of the separator 13. Notably, while the negative electrode 12 may form the winding starting end of the electrode assembly 14, the separators 13 generally extend beyond the end of the negative electrode 12 on the winding starting side, the ends of the separators 13 on the winding starting side forming the winding starting end of the electrode assembly 14.

In the example shown in FIG. 1 and FIG. 2, the positive electrode lead 20 is electrically connected to an intermediate portion such as the center portion of the positive electrode core in the winding direction, and the negative electrode lead 21 is electrically connected to the winding finishing end of the negative electrode core in the winding direction. Nevertheless, the negative electrode lead may be electrically connected to the winding starting end of the negative electrode core in the winding direction. Otherwise, the electrode assembly may have two negative electrode leads, one of the negative electrode leads being electrically connected to the winding starting end of the negative electrode core in the winding direction, the other of the negative electrode leads being electrically connected to the winding finishing end of the negative electrode core in the winding direction. Otherwise, the negative electrode and the exterior can may be electrically connected by the end, of the negative electrode core, on the winding finishing side in the winding direction being brought into contact with an inner surface of the exterior can.

As shown in FIG. 1, the cylindrical battery 10 has an insulating plate 18 arranged on an upper side of the electrode assembly 14 and an insulating plate 19 arranged on a lower side of the electrode assembly 14. In the example shown in FIG. 1, the positive electrode lead 20 attached to the positive electrode 11 extends to the sealing assembly 17 side through a through hole of the insulating plate 18, and the negative electrode lead 21 attached to the negative electrode 12 extends to a bottom 40 side of the exterior can 16 through the outside of the insulating plate 19. The positive electrode lead 20 is connected to a lower surface of a terminal plate 23 which is a bottom plate of the sealing assembly 17 by welding or the like, and a sealing plate 27 which is a top board of the sealing assembly 17 electrically connected to the terminal plate 23 works as a positive electrode terminal. Moreover, the negative electrode lead 21 is connected to an inner surface of the bottom 40 of the exterior can 16 by welding or the like, and the exterior can 16 works as a negative electrode terminal.

The exterior can 16 is a metal-made container having a bottomed tubular portion. By hermetical sealing between the exterior can 16 and the sealing assembly 17 with the annular gasket 28, the inner space of the battery case 15 is hermetically sealed. Moreover, the gasket 28 includes a pinched portion 32 pinched and held by the exterior can 16 and the sealing assembly 17 and insulates the sealing assembly 17 from the exterior can 16. In other words, the gasket 28 has a role as a sealing material for holding gastightness inside the battery and a role as an insulating material which prevents short circuit between the exterior can 16 and the sealing assembly 17.

The exterior can 16 has an annular grooved portion 35 on a part of its cylindrical outer peripheral surface in the axial direction. The grooved portion 35 can be formed, for example, by performing spinning processing inward in the radial direction on a part of the cylindrical outer peripheral surface to recess it inward in the radial direction. The exterior can 16 has a bottomed tubular portion 30 including the grooved portion 35 and an annular shoulder portion 33. The bottomed tubular portion 30 houses the electrode assembly 14 and the non-aqueous electrolyte, and the shoulder portion 33 is folded inward in the radial direction from the end on the opening side of the bottomed tubular portion 30 to extend inward. The shoulder portion 33 is formed when an upper end of the exterior can 16 is folded inward and crimped onto a peripheral edge 31 of the sealing assembly 17. The sealing assembly 17 is pinched and held by the shoulder portion 33 and the grooved portion 35 via the gasket 28 through this crimping and is fixed to the exterior can 16.

Next, a structure of the bottom 40 of the exterior can 16 is described in detail. As shown in FIG. 1, the bottom 40 of the exterior can 16 has an inversion portion 43 having a projecting shape protruding to the electrode assembly 14 side in the axial direction. The inversion portion 43 is present at a center portion of the bottom 40 in the radial direction, and its planar shape as viewed from the outside on the bottom side in the axial direction is substantially circular. The inversion portion 43 includes: a tapered portion 43a an inner diameter of which is decreasing as going to the electrode assembly 14 side in the axial direction; and a flat portion 43b connecting to an annular end, of the tapered portion 43a, that is on the electrode assembly 14 side in the axial direction and being substantially perpendicular to the axial direction. In the present embodiment, the tapered portion 43a and the flat portion 43b have a shape substantially of a truncated cone. Nevertheless, the tapered portion 43a may have any shape an inner diameter of which is decreasing as going to the electrode assembly 14 side in the axial direction. Moreover, the flat portion surface 43b has a substantially circular planar shape as viewed from the outside on the bottom side in the axial direction. The negative electrode lead 21 is connected to the flat portion 43b of the inversion portion 43.

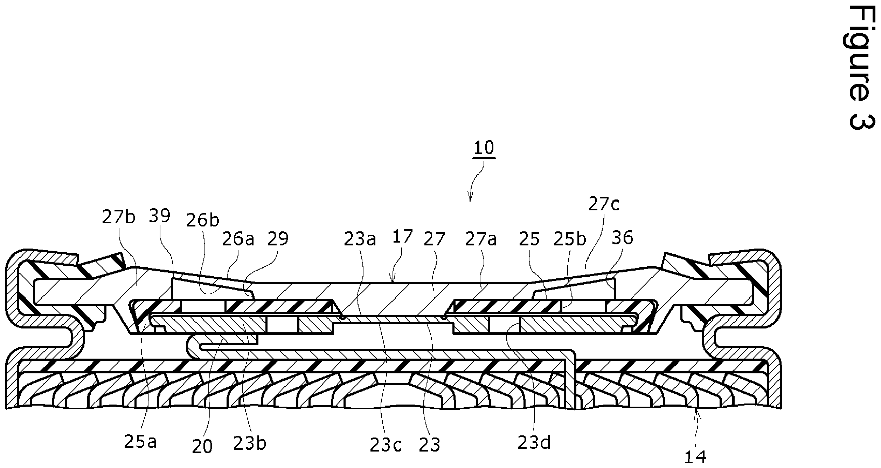

Next, a structure of the sealing assembly 17 is described in detail. FIG. 3 is an expanded sectional view about the periphery of the sealing assembly of the cylindrical battery 10. As shown in FIG. 3, the sealing assembly 17 has a structure having the terminal plate 23, an annular insulating plate 25, and the sealing plate 27 laminated in the order from the electrode assembly 14 side. Each of components constituting the sealing assembly 17 has a disc shape or a ring shape, and the components other than the insulating plate 25 are electrically connected. The terminal plate 23 forms a bottom plate of the sealing assembly 17, and has a circular upper surface 23a positioned on substantially the same plane. The terminal plate 23 has an annular thick portion 23b positioned on its outer side in the radial direction, and a disc-shaped thin portion 23c that connects to the annular end, of the thick portion 23b, on the inner side in the radial direction and is thinner than the thick portion 23b. The positive electrode lead 20 is connected to a lower surface of the thick portion 23b of the terminal plate 23 by welding or the like. The sealing assembly 17 may have a terminal cap placed on the sealing plate 27.

The sealing plate 27 is circular in plan view. The sealing plate 27 can be produced, for example, by pressing a plate material of aluminum or aluminum alloy. Since aluminum and aluminum alloy have excellent flexibility, they are preferably materials for the sealing plate 27 which functions as a safety valve (explosion proof valve). The sealing plate 27 is circular in plan view. The sealing plate 27 has a center portion 27a, an outer peripheral portion 27b, and an inclined portion 27c connecting the center portion 27a and the outer peripheral portion 27b. An upper surface of the thin portion 23c of the terminal plate 23 and a lower surface of the center portion 27a of the sealing plate 27 are joined by metallurgical joining such, for example, as laser welding. When the terminal plate 23 is formed of aluminum or aluminum alloy as with the sealing plate 27, the sealing plate 27 and the terminal plate 23 can be readily joined.

A thickness of the inclined portion 27c is smaller than that of the center portion 27a. A lower surface of the inclined portion 27c is positioned more on the upper side than the lower surface of the center portion 27a, and connects to the lower surface of the center portion 27a via an annular step portion 29. An annular upper surface 26a of the inclined portion 27c is an inclined surface that is positioned more on the upper side as going outward in the radial direction, and an annular lower surface 26b of the inclined portion 27c is also an inclined surface that is positioned more on the upper side as going outward in the radial direction. The thickness of the inclined portion 27c becomes smaller as going outward in the radial direction.

The insulating plate 25 is press fitted and fixed, for example, onto an outer peripheral surface of the annular step portion 29. The insulating plate 25 has, on the outer periphery side in the radial direction, an annular protruding portion 25a bent downward in the axial direction, and the thick portion 23b of the terminal plate 23 is press fitted and fixed, for example, onto an inner peripheral surface of the annular protruding portion 25a. The insulating plate 25 is provided for securing insulation ability to prevent the thick portion 23b of the terminal plate 23 from being electrically connected to the sealing plate 27.

The insulating plate 25 is preferably composed of a material that does not affect battery characteristics. Examples of the material of the insulating plate 25 include polymer resins and, for example, can include a polypropylene (PP) resin and a polybutylene terephthalate (PBT) resin. The insulating plate 25 has one or more vent holes 25b that penetrate in the axial direction, at places overlapping with the inclined portion 27c of the sealing plate 27 in the axial direction, and the terminal plate 23 has one or more vent holes 23d that penetrate in the axial direction, at places overlapping with the insulating plate 25 in the axial direction. With this configuration, gas generated in the electrode assembly 14 can pass through the vent hole(s) 23d, between the insulating plate 25 and the insulating plate 25, and through the vent hole(s) 25b to flow into a space 36 provided between the inclined portion 27c and the insulating plate 25 with respect to the axial direction.

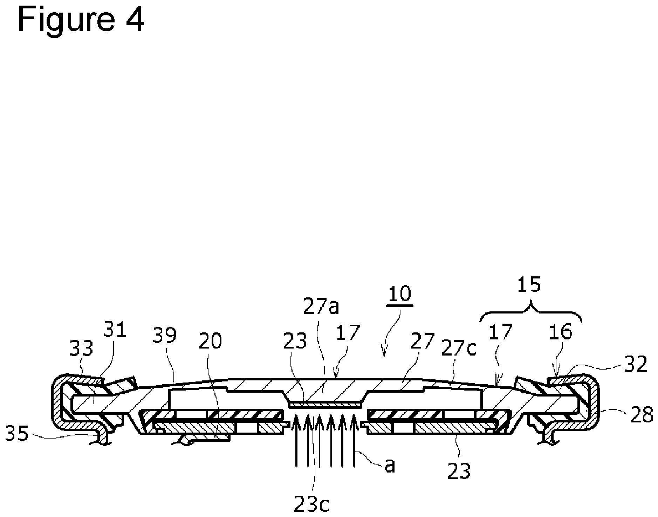

With the configuration above, when abnormal heat generation of the cylindrical battery 10 occurs and an internal pressure of the cylindrical battery 10 reaches a predetermined value, the sealing assembly 17 performs the current interruption operation and the gas discharging operation as follows. In detail, when abnormal heat generation of the cylindrical battery 10 occurs and the internal pressure of the cylindrical battery 10 reaches the predetermined value, as shown in FIG. 4, the center portion 27a and the inclined portion 27c of the sealing plate 27 are inverted upward in the axial direction due to pressure inside the battery indicated by arrows a with an annular end 39 that has low rigidity in the inclined portion 27c and is on the outer side in the radial direction being as a fulcrum. Simultaneously with the inversion, as shown in FIG. 4, the thin portion 23c of the terminal plate 23 ruptures to cut off a portion thereof that is connected to the sealing plate 27 from the terminal plate 23, or there are taken apart a welding portion between the terminal plate 23 and the sealing plate 27. This operation disconnects the current path between the terminal plate 23 and the sealing plate 27.

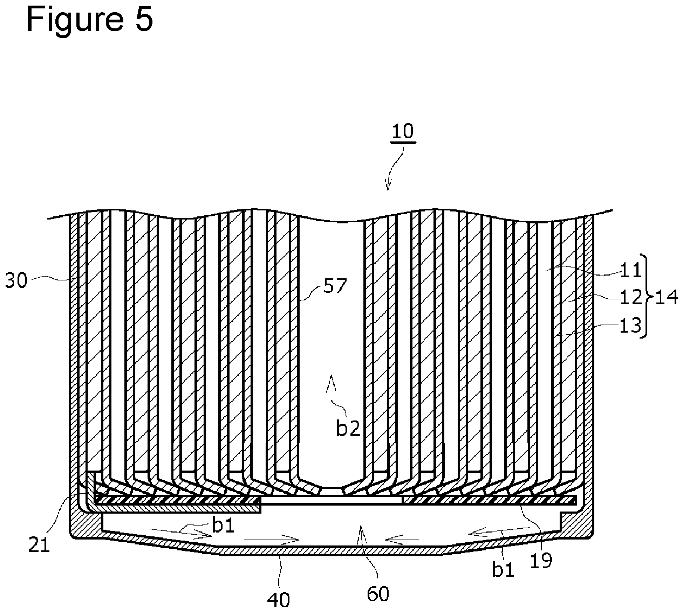

When the internal pressure further rises, as shown in FIG. 5, the inversion portion 43 of the bottom 40 is inverted downward in the axial direction with its annular end 48 on the outer side in the radial direction being as a fulcrum. After the inversion portion 43 of the bottom 40 is inverted, the inversion portion 43 takes a projecting shape protruding to the opposite side to the electrode assembly 14 side in the axial direction. After that, when the internal pressure further rises, the annular end 39 of the inclined portion 27c ruptures and gas inside the battery is discharged to the outside through the vent hole(s) 23d and the vent hole(s) 25b from the portion where the sealing plate 27 ruptures. Thereby, even when the internal pressure of the cylindrical battery 10 rises, the battery is prevented from blowing up, which can restrain the influence on a device having the cylindrical battery 10 mounted to improve safety. The sealing plate 27 constitutes the safety valve, and the inclined portion 27c of the sealing plate 27 forms a rupturing portion that is to rupture and thereby discharge the gas inside to the outside.

A first pressure at which the sealing plate 27 as the safety valve ruptures can be adjusted, for example, with a thickness of the annular end 39 of the inclined portion 27c on the outer side in the radial direction. A second pressure at which the inversion portion 43 is inverted can be adjusted, for example, with a thickness, of the tapered portion 43a of the bottom 40, at the annular end 48 on the outer side in the radial direction. The second pressure is adjusted so as to be smaller than the first pressure, being preferably adjusted so as to be smaller than a pressure at which the sealing assembly 17 performs current interruption.

### [Example]

The inventors confirmed that when a cylindrical battery of the following example was produced, its inversion portion was able to be inverted to the opposite side to the electrode assembly side in the axial direction before the sealing plate (safety valve) ruptured.

### (Production of Positive Electrode)

LiNi_{0.8}Co_{0.15}Al_{0.05}O₂ was used as the positive electrode active material. One hundred pts. mass of the positive electrode active material, 1.7 pts. mass of polyvinylidene fluoride as the binder agent, and 2.5 pts. mass of acetylene black as the conductive agent were mixed in a dispersion medium to prepare the positive electrode mixture slurry. The positive electrode mixture slurry was applied and dried on both sides of the positive electrode current collector composed of aluminum foil except on the connection portion of the positive electrode lead, and was afterward rolled to a predetermined thickness thereby to obtain a positive electrode plate. The positive electrode plate was cut to have a predetermined size, and the positive electrode lead made of Al was connected to the exposed portion of the current collector by ultrasonic welding to produce the positive electrode.

### (Production of Negative Electrode)

Readily graphitizable carbon was used as the negative electrode active material. One hundred pts. mass of the negative electrode active material, 0.6 pts. mass of polyvinylidene fluoride as the binder agent, 1 pt. mass of carboxymethylcellulose as the thickener agent, and an appropriate amount of water were stirred by a double-arm kneader to obtain the negative electrode mixture slurry. The negative electrode mixture slurry was applied and dried on both sides of the negative electrode current collector composed of copper foil except on the connection portion of the negative electrode lead, and was afterward rolled to a predetermined thickness thereby to obtain a negative electrode plate. The negative electrode plate was cut to have a predetermined size, and the negative electrode lead composed of a Ni-Cu-Ni cladding material was connected to the exposed portion of the current collector by ultrasonic welding to produce the negative electrode.

### (Preparation of Non-Aqueous Electrolyte Solution)

In a mixed solvent of ethylene carbonate (EC), diethyl carbonate (DEC), and ethyl methyl carbonate (EMC), lithium hexafluorophosphate (LiPF⁶) as the electrolyte was dissolved in 1.0 mol/L to prepare a non-aqueous electrolyte solution.

### (Production of Sealing Assembly)

A sealing assembly having the structure shown in FIG. 2 was produced. First, the circular terminal plate was formed using an aluminum material, and the thin portion was provided at the center portion of the terminal plate in the radial direction. After that, the terminal plate, the sealing plate, and the insulating plate were integrated to produce the sealing assembly.

### (Production of Exterior Can)

An exterior can having the structure shown in FIG. 1 was produced. In production of the exterior can, the inversion mechanism was produced at the position, of a steel plate, corresponding to the can bottom before drawing processing, by pressing. The pressure in the inversion due to the internal pressure of the battery rising was adjusted to 1.5 MPa smaller than the rupturing pressure of the sealing plate as the safety valve, and the inversion portion was designed to have a large thickness so as not to rupture even at 4 MPa of internal pressure. After that, the steel plate underwent drawing processing thereby to produce the exterior can having the inversion portion at the bottom.

### (Assembly of Cylindrical Battery)

The aforementioned positive electrode and electrode plates were wound into a spiral shape via the polyolefin-based resin-made separators to produce the electrode assembly. The electrode assembly was inserted into the exterior can via a disc-shaped can bottom insulating plate, and the negative electrode lead connected to the negative electrode and the battery can bottom surface were electrically connected by welding. The electrode assembly was inserted into the exterior can via the disc-shaped can bottom insulating plate, and the negative electrode lead electrically connected to the negative electrode and the can bottom surface were electrically connected. After welding the positive electrode lead to the sealing assembly, a predetermined amount of the non-aqueous electrolyte solution was injected into the exterior can. Then, the sealing assembly was arranged on the grooved portion of the exterior can via the gasket. After that, the inside of the battery was hermetically sealed by crimping the sealing assembly onto the opening of the exterior to produce the cylindrical battery.

According to the present disclosure, before the sealing plate 27 functioning as the safety valve ruptures, there is inverted the inversion portion 43 which is provided in the bottom 40 of the cylindrical battery 10 and has the projecting shape protruding to the electrode assembly 14 side in the axial direction. Accordingly, before the sealing plate 27 discharges high temperature gas, a space 60 (refer to FIG. 5) is to be formed between a lower surface of the electrode assembly 14 and the bottom 40 of the exterior can 16. As a result, there can be rectified high temperature gas flowing out from the lower surface of the electrode assembly 14, to the sealing assembly 17 side via a hollow portion 57 of the electrode assembly 14 as indicated by the arrows b 1 and arrow b2 in FIG. 5. As above, since the high temperature gas can be restrained from flowing through the outer periphery side of the exterior can 16, a lateral surface of the exterior can 16 can be effectively restrained from being damaged when abnormal heat generation of the cylindrical battery 10 occurs. Accordingly, since even when abnormal heat generation of the cylindrical battery 10 occurs, high temperature gas can be smoothly discharged via the safety valve, there can be restrained batteries and devices around the cylindrical battery 10 from being damaged.

### [Preferably Employed Configurations for Cylindrical Battery and Effects Thereof]

The inversion portion 43 may include: the tapered portion 43a an inner diameter of which is decreasing as going to the electrode assembly 14 side in the axial direction; and the flat portion 43b connecting to an inner circumferential end of the tapered portion 43a and spreading substantially parallel to a plane substantially perpendicular to the axial direction. Moreover, the inversion portion 43 is preferably provided at a center of the bottom 40, and a planar shape of the inversion portion 43 is still preferably circular.

According to the aforementioned configurations, the inversion portion 43 is readily, smoothly inverted with the annular annular end 48 of the tapered portion 43a on the outer side in the radial direction being as a fulcrum. Moreover, since after the inversion, a distance between a lower surface of the hollow portion 57 of the electrode assembly 14 and the bottom 40 of the exterior can 16 increases, high temperature gas can be efficiently guided to the sealing assembly 17 side.

Notably, the present disclosure is not limited to the aforementioned embodiment and its modifications but various improvements and alterations thereof may occur without departing from the matters disclosed in the claims of the present application or their equivalents.

For example, for the aforementioned embodiment, there has been described a case where the inversion portion 43 has the tapered portion 43a and the flat portion 43b. Nevertheless, the inversion portion may have any projecting shape protruding to the electrode assembly side in the axial direction and, for example, the inversion portion may have a dome shape formed by horizontally rotating an arch around its top.

Moreover, while there has been described a case where the inversion portion 43 is provided at the center of the bottom 40, the inversion portion may include a portion, of the bottom, that is positioned on the outer side in the radial direction. Moreover, while there has been described a case where the planar shape of the inversion portion 43 is circular, the planar shape of the inversion portion may be any shape other than the circle shape and, for example, the planar shape of the inversion portion may be a square shape, a rectangle shape, or an ellipse shape.

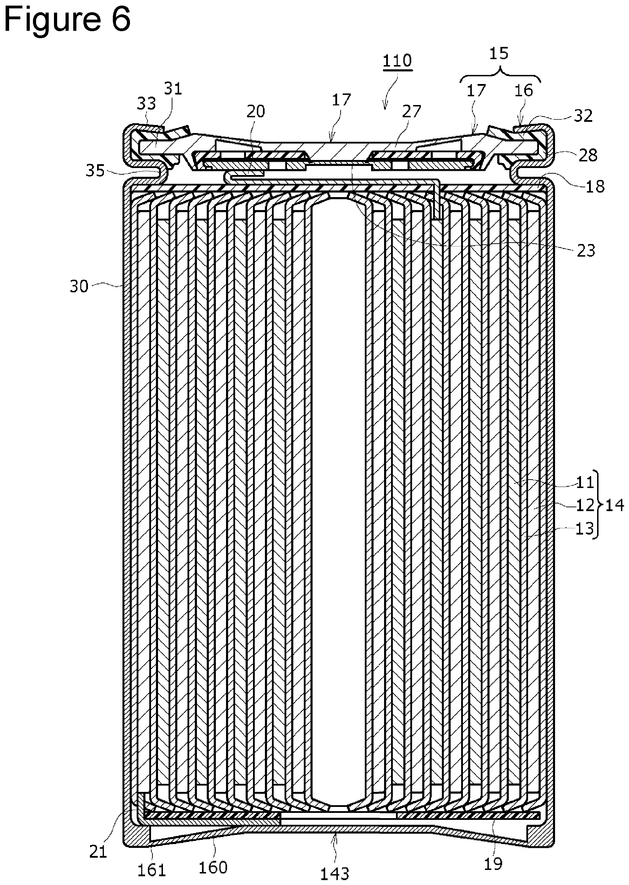

Moreover, as shown in FIG. 6, that is, a sectional view, corresponding to FIG. 1, of a cylindrical battery 110 of a modification, an inversion portion 143 may have an annular portion 160 in the outer side in the radial direction a thickness of which in the axial direction is decreasing as going to the outer side in the radial direction. By doing so, an outer circumferential end 161 of the annular portion 160 can be securely set to the fulcrum of the inversion, and the desired inversion can be attained.

### REFERENCE SIGNS LIST

10, 110 cylindrical battery, 11 positive electrode, 12 negative electrode, 13 separator, 14 electrode assembly, 15 battery case, 16 exterior can, 17 sealing assembly, 20 positive electrode lead, 21 negative electrode lead, 23 terminal plate, 27 sealing plate, 28 gasket, 40 bottom, 43, 143 inversion portion, 43a tapered portion, 43b flat portion.

## Claims

1. A cylindrical battery, comprising:
an electrode assembly having a positive electrode and a negative electrode wound via a separator;
a bottomed tubular exterior can housing the electrode assembly; and
a sealing assembly sealing an opening of the exterior can, wherein
a bottom of the exterior can has an inversion portion that has a projecting shape protruding to the electrode assembly side in an axial direction and that is inverted when a battery internal pressure reaches a first pressure, and
the sealing assembly has a safety valve that discharges gas inside the battery by rupturing when the battery internal pressure reaches a second pressure larger than the first pressure.

2. The cylindrical battery according to claim 1, wherein a bottom surface of the inversion portion includes: a tapered portion an inner diameter of which is decreasing as going to the electrode assembly side in the axial direction; and a flat portion connecting to an inner circumferential end of the tapered portion and being substantially perpendicular to the axial direction.

3. The cylindrical battery according to claim 1 or 2, wherein the inversion portion is provided at a center of the bottom.

4. The cylindrical battery according to any one of claims 1 to 3, wherein a planar shape of the inversion portion is circular.
